(19) Europäisches Patentamt / European Patent Office / Office européen des brevets

(11) **EP 3 322 506 B1**

(12) **EUROPÄISCHE PATENTSCHRIFT**

(45) Veröffentlichungstag und Bekanntmachung des Hinweises auf die Patenterteilung:
**04.09.2019 Patentblatt 2019/36**

(21) Anmeldenummer: **16741895.3**

(22) Anmeldetag: **11.07.2016**

(51) Int Cl.:
**B01D 53/22** *(2006.01)*

(86) Internationale Anmeldenummer:
**PCT/EP2016/066398**

(87) Internationale Veröffentlichungsnummer:
**WO 2017/009276 (19.01.2017 Gazette 2017/03)**

(54) **KONTINUIERLICHES VERFAHREN ZUR REINIGUNG VON BEI DER PRODUKTION VON SILICONEN ANFALLENDER PROZESSABLUFT**

CONTINUOUS PROCESS FOR CLEANING PROCESS WASTE AIR OBTAINED IN THE PRODUCTION OF SILICONES

PROCÉDÉ EN CONTINU DE NETTOYAGE D'AIR DE PROCESSUS ÉVACUÉ PRODUIT LORS DE LA PRODUCTION DE SILICONES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.07.2015 DE 102015213252**

(43) Veröffentlichungstag der Anmeldung:
**23.05.2018 Patentblatt 2018/21**

(73) Patentinhaber: **Wacker Chemie AG**
**81737 München (DE)**

(72) Erfinder:
- **FUERST, Josef**
  **84561 Mehring (DE)**
- **BECKER, Nils**
  **84489 Burghausen (DE)**
- **DUSCHL, Dieter**
  **84508 Burgkirchen (DE)**
- **SCHUSTER, Johann**
  **84547 Emmerting (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

- MARC AJHAR ET AL: "Siloxane removal using siliconerubber membranes", SEPARATION AND PURIFICATION TECHNOLOGY, ELSEVIER SCIENCE, AMSTERDAM, NL, Bd. 89, 3. Januar 2012 (2012-01-03), Seiten 234-244, XP028469169, ISSN: 1383-5866, DOI: 10.1016/J.SEPPUR.2012.01.003 [gefunden am 2012-01-26]
- J Patrick Montoya: "Membrane Gas Exchange Using Hollow Fiber Membranes to Separate Gases from Liquid and Gaseous Streams Types of Hollow Fiber Membranes", , 1. Januar 2010 (2010-01-01), XP055305659, Gefunden im Internet: URL:https://permselect.com/files/Using_Membranes_for_Gas_Exchange.pdf [gefunden am 2016-09-27]
- OHLROGGE K ET AL: "Membranes for Recovery of Volatile Organic Compounds", MEMBRANE OPERATIONS IN MOLECULAR SEPARATIONS / [CONTRIBUTORS: G. ALBERTI ...] - GESAMTTITEL: COMPREHENSIVE MEMBRANE SCIENCE AND ENGINEERING / DRIOLI, ENRICO ; VOL. 2, AMSTERDAM [U.A.] : ELSEVIER, ACAD. PRESS, 2010, NL, Bd. 2, 1. Januar 2010 (2010-01-01), Seiten 213-242, XP008181852, DOI: 10.1016/B978-0-08-093250-7.00041-4 ISBN: 978-0-444-53206-0 [gefunden am 2010-07-12]

(56) Entgegenhaltungen:
**US-A- 4 941 893**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

• AJHAR M, TRAVESSET M, YÜCE S, MELIN T: "Siloxane removal from landfill and digester gas - A technology overview", BIORESOURCE TECHNOLOGY, ELSEVIER BV, GB, Bd. 101, Nr. 9, 1. Mai 2010 (2010-05-01), Seiten 2913-2923, XP026870328, ISSN: 0960-8524 in der Anmeldung erwähnt

• Ajhar M: "Membran-based Removal of Volatile Methylsiloxanes from Biogas", HOCHSCHULE AACHEN , 2011, XP002762302, Gefunden im Internet: URL:http://publications.rwth-aachen.de/record/64099/files/3923.pdf in der Anmeldung erwähnt

**Beschreibung**

Die Erfindung betrifft ein kontinuierliches Verfahren zur Reinigung von Organosiliciumverbindungen enthaltender Prozessabluft, die beim Produktionsprozess zur Herstellung von Siliconen anfällt.

Aus US 4,941,893 ist ein Verfahren zur Gasabtrennung bei der Herstellung von Halbleitersiliciummetall bekannt, wobei aus dem Gasgemisch mittels einer semipermeablen Membran selektiv Wasserstoff und Wasserstoffchlorid von Chlorsilan abgetrennt wird. Als selektive Membran wird dabei bevorzugt eine mit sulfoniertem Polysulfon beschichtete Polysulfon-Compositmembran eingesetzt.

In M. Ajkar, M. Travesset, S. Yüce und T. Melin, "Siloxan removal from landfill and digester gas - A technology overview", Bioresource Technology 101, 2913-2923 (2010) ist die Abtrennung von flüchtigen Siloxanen aus Deponiegas mittels verschiedener Technologien, u. a. mittels Membranen, beschrieben.

Marc Ajhar beschreibt in der Dissertation über "Membrane-based Removal of Volatile Methylsiloxanes from Biogas" an der Hochschule Aachen (2011) auf S. 68-104 die Verwendung einer Polydimethylsiloxan(PDMS)-Membran zur Entfernung flüchtiger Methylsiloxane aus biogenen Gasen, wobei flüchtige Methylsiloxane in geringen Mengen im Bereich von ca. 0,15 g/m$^3$ aus einem Methan-/Kohlendioxidgas-Gemisch abgetrennt werden.

Es bestand die Aufgabe, ein kontinuierliches Verfahren zur Reinigung von Organosiliciumverbindungen enthaltender Prozessabluft, die bei der Produktion von Siliconen entsteht, bereitzustellen, wobei Organosiliciumverbindungen, insbesondere Siloxane, auch in größeren Mengen aus Stickstoff/Sauerstoff-Gasgemischen selektiv entfernt werden können.

Die Aufgabe wird durch die Erfindung gelöst.

Gegenstand der Erfindung ist ein kontinuierliches Verfahren zur Reinigung von Organosiliciumverbindungen enthaltender Prozessabluft, die beim Produktionsprozess zur Herstellung von Siliconen anfällt, durch Abtrennung von Organosiliciumverbindungen ausgewählt aus der Gruppe von linearen, cyclischen und verzweigten Siloxanen mit 2 bis 18 Si-Atomen, Triorganosilanolen und deren Mischungen aus dem Stickstoff und Sauerstoff enthaltenden Prozessabluftstrom mittels einer Membrantrenneinrichtung, die eine semipermeable Membran auf der Basis von Siliconen enthält, wobei die Membran selektiv permeabel für Organosiliciumverbindungen und Sauerstoff gegenüber Stickstoff ist und wobei der zu trennende, Organosiliciumverbindungen, Stickstoff und Sauerstoff enthaltende Feed-Gasstrom kontinuierlich auf den Eingang der Membrantrenneinrichtung gegeben wird, in der er durch Kontaktierung mit der Membran kontinuierlich in einen die Membrantrenneinrichtung verlassenden mit Organosiliciumverbindungen abgereicherten Retentat-Gasteilstrom und einen die Membrantrenneinrichtung verlassenden mit Organosiliciumverbindungen angereicherten Permeat-Gasteilstrom getrennt wird.

Bei dem Produktionsprozess zur Herstellung von Siliconen handelt es sich um die Herstellung von Siliconkautschuk, wie HTV- RTV- und LSR-Siliconkautschuk, oder die Herstellung von Siliconpolymeren. Die dabei entstehende Prozessabluft enthält Organosiliciumverbindungen ausgewählt aus der Gruppe von linearen, cyclischen und verzweigten Siloxanen mit 2 bis 18 Si-Atomen, Triorganosilanolen und deren Mischungen.

Diese Prozessabluft wird als Feed-Gas auf die erfindungsgemäße semipermeable Membran geleitet.

Vorzugsweise sind die im Feed-Gas enthaltenen Organosiliciumverbindungen solche ausgewählt aus der Gruppe von linearen Siloxanen der Formel

$$R_3SiO(R_2SiO)_nSiR_3 \qquad (I),$$

wobei R gleich oder verschieden ist und einen einwertigen Kohlenwasserstoffrest mit 1 bis 12 C-Atomen, vorzugsweise 1-6 C-Atomen, bevorzugt einen Methyl- oder Vinylrest, bedeutet und n 0 oder eine ganze Zahl von 1 bis 16 bedeutet, cyclischen Siloxanen der Formel

$$(R_2SiO)_x \qquad (II),$$

wobei R die oben dafür angegebene Bedeutung hat und x eine ganze Zahl von 3 bis 18, vorzugsweise 3 bis 6, bedeutet, Triorganosilanolen der Formel

$$R_3SiOH \qquad (III),$$

wobei R die oben dafür angegebene Bedeutung hat, und deren Mischungen.

Kernstück der erfindungsgemäßen Abgasreinigung ist eine semipermeable Membran. Der bei der Produktion von Siliconen anfallende Prozessabluftstrom wird als Feed-Gasstrom auf den Eingang einer Membrantrenneinrichtung mit einer semipermeablen Membran geleitet und in der Membrantrenneinrichtung mit der Membran in Kontakt gebracht. Diese Membran ist vorzugsweise eine Polyoctylmethylsiloxan-Kompositmembran, bevorzugt eine Polyoctylmethylsiloxan-Kompositmembran auf poröser Stützstruktur aus Polyacrylnitril/Polyestervlies (POMS). Erhältlich ist eine solche Membran beim Helmholtz-Zentrum Geesthacht, Zentrum für Material- und Küstenforschung GmbH, Max-Planck-Straße 1, 21502 Geesthacht, Deutschland.

Das Membranmaterial ist in der Lage, im Feed-Gas enthaltene Organosiliciumverbindungen zu lösen. An der Permeatseite der Membran, d.h. an der entgegengesetzten Seite der Membran, an der das Feedgas mit der Membran in Kontakt gebracht wird, ist vorzugsweise ein Unterdruck mit Hilfe einer Vakuumpumpe angelegt, der die treibende Kraft für die Migration der im Membranmaterial gelösten Verbindungen darstellt.

Das Feed-Gas enthält vorzugsweise Stickstoff in Mengen von größer gleich 95 Vol-% und vorzugsweise Sauerstoff in Mengen von kleiner gleich 5 Vol-%.

An der Permeatseite der Membran wird ein Unterdruck angelegt, vorzugsweise mit Hilfe einer Vakuumpumpe. Der Druck im Permeat-Gasteilstom beträgt vorzugsweise höchstens 0,15 bar, was den Vorteil hat, dass eine Zündung der abgetrennten Organosiliciumverbindungen mit dem Sauerstoff verhindert wird. Bevorzugt ist ein Druck von 0,02 bis 0,07 bar. Dieser Druck kann vorzugsweise mit Hilfe von Flüssigkeitsringpumpen realisiert werden. Durch geeignete Wahl der Vakuumanlage können auch deutlich niedrigere Drücke erreicht werden.

Der Druck im Feed-Gas beträgt vorzugsweise mindestens 1 bar, und höchstens 16 bar, wobei ein Druck von 1,0 bis 1,5 bar bevorzugt ist.

Die Temperatur im Feed-Gas und im erfindungsgemäßen Verfahren beträgt vorzugsweise höchstens 100°C und vorzugsweise mindestens 5°C, bevorzugt 30°C bis 40°C.

Die Abscheideleistung der Membran ist durch das Druckverhältnis von Feed-Gasstrom zu Permeat-Gasstrom variierbar. Dabei können sowohl die Drücke auf der Feed- als auch auf der Permeatseite entsprechend gewählt werden. Das Druckverhältnis von Feed-Gasstrom zu Permeat-Gasteilstrom beträgt vorzugsweise mindestens 7 und kann bis zu 16 Millionen betragen, wobei ein Druckverhältnis von 7 bis 50 bevorzugt ist und ein Druckverhältnis von 15 bis 20 besonders bevorzugt ist.

Der resultierende Retentat-Gasstrom ist entsprechend an Organosiliciumverbindungen verarmt. Der Retentat-Gasstrom kann entweder wieder in den Prozess als Inertgas kontinuierlich zurückgeführt oder an die Umwelt kontinuierlich abgegeben werden.

Der Retentat-Gasstrom enthält vorzugsweise einen höheren Gehalt an Stickstoff und einen niedrigeren Gehalt an Sauerstoff von als der Feedgasstrom. Das Retentat-Gasstrom enthält daher Stickstoff vorzugsweise in Mengen von 95 bis 98 Vol-%, und Sauerstoff vorzugsweise in Mengen von 2 bis 5 Vol-%.

Der resultierende Permeat-Gasstrom ist entsprechend mit Organosiliciumverbindungen angereichert. Diese können durch entsprechende Maßnahmen, vorzugsweise durch Kondensation, z. B. durch Kondensation an einem Rohrbündelwärmetauscher oder Plattenwärmetauscher oder einem Wärmetauscher mit einer kontinuierlich reinigbaren Oberfläche, wie Kratzkühler, aus dem Permeat-Gasstrom kontinuierlich auskondensiert werden. Das anfallende Kondensat wird vorzugsweise gesammelt und verwertet. Der entstehende Prozess-Abgassstrom kann je nach Verschaltung entweder zusammen mit dem Retentat-Gasstrom oder alleine kontinuierlich an die Umwelt abgegeben werden.

Die Membrantrenneinrichtung ist so aufgebaut, dass die aktive Membranfläche beliebig groß gewählt werden kann. Dadurch kann ein sehr großer Konzentrationsbereich, insbesondere eine große Fracht an flüchtigen Organosiliciumverbindungen im Feedgas abgedeckt werden. Diese Fracht kann von wenigen Gew.-ppm bis zu mehreren Kilogramm/h in Summe betragen.

Die Fracht [g/h] an im Feedgas enthaltenen Organosiliciumverbindungen ergibt sich aus dem Produkt von Volumenstrom [$m^3$/h] und Konzentration [g/$m^3$].

Gemäß der Dissertation von Marc Ajhar sind die Konzentrationen an flüchtigen Methylsiloxane im Deponiegas gering, insbesondere in Summe unter 0,15 g/$m^3$, und es werden nur kleine Frachten an flüchtigen Methylsiloxane aus dem Deponiegas entfernt. Im Gegensatz dazu werden gemäß dem erfindungsgemäßen Verfahren große Konzentrationen und Frachten an Organosiliciumverbindungen aus der Prozessabluft entfernt, d. h. es kann mit dem erfindungsgemäßen Verfahren die Prozessabluft aus großtechnischen Prozessen gereinigt werden.

Die Summe der Konzentration der Organosiliciumverbindungen im Feedgas beträgt vorzugsweise 0,3 g/$m^3$ bis 1000 g/$m^3$, bevorzugt 1 g/$m^3$ bis 100 g/$m^3$.

Der Volumenstrom des Feedgases beträgt vorzugsweise 10 $m^3$/h bis 2000 $m^3$/h, bevorzugt 30 $m^3$/h bis 500 $m^3$/h, bezogen auf Norm trocken (Normbedingungen: Druck von 1,01325 bar, Temperatur von 273,15 K und eine absolute Luftfeuchtigkeit von 0 %).

Die Fracht [g/h] an im Feedgas enthaltenen Organosiliciumverbindungen beträgt in Summe vorzugsweise 10 g/h bis 10000 g/h, bevorzugt 1000 g/h bis 5000 g/h.

Dieser Feed-Gasstrom wird nach Kontakt mit der Membran in der Membrantrenneinrichtung in einen abgereicherten Retentat-Gasstrom und einen angereicherten Permeat-Gasstrom aufgeteilt, wobei durch Abtrennung der Organosiliciumverbindungen aus dem Permeat-Gasstrom mittels geeigneter Maßnahmen, wie Kondensation, ein Prozessabgasstrom erhalten wird.

Aus dem Produkt von Volumenstrom [$m^3$/h] und Konzentration [g/$m^3$] des Feedgases kann die Fracht [g/h], jeweils bezogen auf jede einzelne Art an Organosiliciumverbindung oder bezogen auf die Summe der Organosiliciumverbindungen, des Feedgases berechnet werden. Ebenso kann aus dem gemessenen Volumenstrom [m³/h] und der gemessenen Konzentration [g/m³] des Retentatgases die Fracht [g/h] an Organosiliciumverbindungen im Retentatgas errechnet werden. Die Permeabilität der Organosiliciumverbindungen hinsichtlich der Membran und damit der Abreicherungsgrad der Fracht an Organosiliciumverbindungen im Retentatgas kann dann folgendermaßen bestimmt werden:

$$\eta \: [\%] \: = \: [1 \: - \: (\text{Fracht}_{\text{Retentat}}/\text{Fracht}_{\text{Feed}})] \: \times \: 100$$

Die Permeablilität der Organosiliciumverbindungen beträgt vorzugsweise 30 % bis 100 %, bevorzugt 50 % bis 100 %, besonders bevorzugt 60 % bis 90 %.

Die Abscheideleistung von Organosiliciumverbindungen aus den Feedgasen kann durch Reihenschaltung mehrerer Membrantrenneinrichtungen noch weiter optimiert werden. Dabei wird der verbleibende Permeat-Gasstrom kontinuierlich auf eine weitere in Reihe geschaltete Membrantrenneinrichtung geleitet. Dort findet erneut eine Aufteilung in Permeat und Retentat statt.

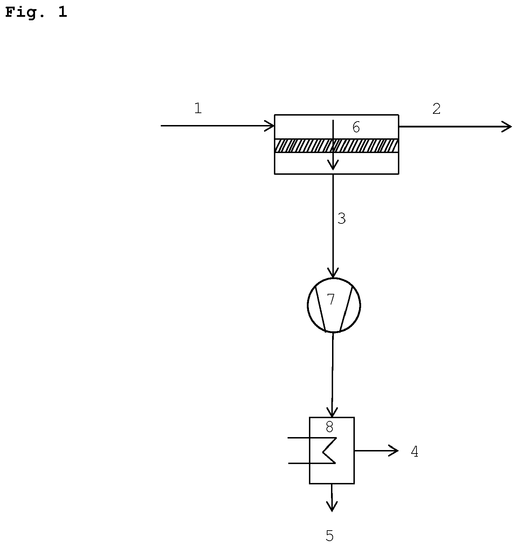

Das Verfahren wird in Fig. 1 beispielhaft dargestellt.

Die bei der Produktion von Siliconen anfallende Prozessabluft wird als Feedgas **1** auf den Eingang einer Membrantrenneinrichtung mit einer semipermeablen Membran **6** geleitet. Das Feedgas wird an der Membran **6** in ein mit Organosiliciumverbindungen abgereichertes Retentatgas **2** und ein mit Organosiliciumverbindungen angereichertes Permeatgas **3** aufgeteilt. Das Retentatgas **2** kann entweder in den Prozess als Inertgas zurückgeführt werden oder an die Umwelt abgegeben werden. An der Permeatseite der Membran ist vorzugsweise ein Unterdruck mit Hilfe einer Vakuumpumpe **7** angelegt, der die treibende Kraft für die Migration der im Membranmaterial gelösten Verbindungen darstellt. Die im Permeatgas **3** angereicherten Organosiliciumverbindungen können vorzugsweise durch Kondensation mithilfe eines Kondensators **8** abgetrennt werden. Das Kondensat **4** wird vorzugsweise gesammelt und verwertet. Das entstehende Prozessabgas **5** wird dabei an die Umwelt abgegeben entweder alleine oder zusammen mit dem Retentatgas.

Bestimmung des Volumenstroms:

Differenzdruckmessung mit Prandtl'schem Staurohr ermittelt nach DIN EN 15259.
Nachweisgrenze: 1 m³/s
Genauigkeit: ± 10% geschätzt

Bestimmung der Organosiliciumverbindungen:

Integrale Probenahme mittels evakuiertem Gassammelgefäß aus Abgasstrom über Kapillare, qualitative und quantitative Bestimmung mit GC-FID, in Anlehnung an DIN EN 13464. Nachweisgrenze: < 2 mg/m³ je Art von Organosiliciumverbindung Genauigkeit: ± 10% geschätzt

**Beispiel 1:**

Die bei der Produktion von hochtemperaturvernetzenden Silikonkautschuken kontinuierlich entstehende Prozessabluft wird als Feedgasstrom 1 mit 50 m³/h zur Membran **6** bei einer Temperatur von 40°C und einem Druck von 1080 mbar absolut geleitet. Dieser Feedgasstrom wird an der Membran in 40 m³/h Retentat-Gasstrom 2 und 10 m³/h Permeat-Gasstrom 3 aufgeteilt. Der Druck auf der Permeatseite beträgt 60 mbar absolut. Dies entspricht einem Druckverhältnis von 17,5. Der Kondensator **8** wurde mit einem Kühlmittel von -10°C betrieben.

An qualifizierten Stichproben wurden die in Tabelle 1 aufgeführten Konzentrationen an wichtigen Inhaltsstoffen der Prozessabluft gemessen. Mit Hilfe der gemessenen Volumenströme lassen sich daraus die entsprechenden Frachten berechnen. Der Feed-Gasstrom **1** wurde vor Eintritt in die Membran entnommen, das Prozessabgas **5** wurde nach dem Kratzkühler **8** gemessen, das Retentat **2** nach der Membran bestimmt.

Die Ergebnisse sind in Tabelle 1 zusammengefasst.

Feedgas:

N₂: ≥ 95 Vol%
O₂: ≤ 5 Vol%

Retentat:

N₂: 95 - 98 Vol%
O₂: 2 - 5 Vol%

Organosiliciumverbindungen:

| | |
|---|---|
| Si2: | Hexamethyldisiloxan |
| M3SiOH: | Trimethylsilanol |
| D3: | Hexamethylcyclotrisiloxan |
| D4: | Octamethylcyclotetrasiloxan |
| D5: | Decamethylcyclopentasiloxan |
| D6: | Undecamethylcyclohexasiloxan |

Tabelle 1:

| Organosiliciumverb. | Feedgas | | Prozessgas | | Retentat | | Permeabilität |
|---|---|---|---|---|---|---|---|
| | Konzentration [mg/m$^3$] | Fracht [mg/h] | Konzentration [mg/m$^3$] | Fracht [mg/h] | Konzentration [mg/m$^3$] | Fracht [mg/h] | [%] |
| Si2 | 13.000 | 650.000 | 6.800 | 68.000 | 2.800 | 112.000 | 83 |
| M3SiOH | 8.700 | 435.000 | 14.900 | 149.000 | 1.900 | 76.000 | 83 |
| D3 | 680 | 34.000 | 1.380 | 13.800 | 130 | 5.200 | 85 |
| D4 | 300 | 15.000 | 300 | 3.000 | 54 | 2.160 | 86 |
| D5 | 140 | 7.000 | 30 | 300 | 43 | 1.720 | 75 |
| D6 | 30 | 1.500 | 50 | 500 | 12 | 480 | 68 |
| **Summe** | **22.850** | **1.142.500** | **23.460** | **234.600** | **4.939** | **197.560** | **83** |

Die Permeabilität der Organosiliciumverbindungen wird folgendermaßen berechnet:

$$\eta\,[\%] \;=\; [1 - (\text{Fracht}_{\text{Retentat}}/\text{Fracht}_{\text{Feed}})]\;\times\;100 \cdot$$

**Beispiel 2:**

Die bei der Produktion von hochtemperaturvernetzenden Silikonkautschuken kontinuierlich entstehende Prozessabluft wird als Feedgasstrom **1** mit 50 m$^3$/h zur Membran **6** bei einer Temperatur von 40°C und einem Druck 1080 mbar absolut geleitet. Dieser Feedgasstrom wird an der Membran in 40 m$^3$/h Retentat **2** und 10 m$^3$/h Permeatgasstrom **3** aufgeteilt. Der Druck auf der Permeatseite beträgt 60 mbar absolut. Dies entspricht einem Druckverhältnis von 17,5. Der Kondensator **8** wurde mit einem Kühlmittel von -10°C betrieben.

An qualifizierten Stichproben wurden die in Tabelle 2 aufgeführten Konzentrationen an wichtigen Inhaltstoffen der Prozessabluft gemessen. Mit Hilfe der gemessenen Volumenströme lassen sich daraus die entsprechenden Frachten berechnen. Der Feed-Gasstrom **1** wurde vor Eintritt in die Membran entnommen, das Prozessabgas **5** wurde nach dem Kratzkühler **8** gemessen, das Retentat **2** nach der Membran bestimmt.
Die Ergebnisse sind in Tabelle 2 zusammengefasst.

Feedgas:

N$_2$: $\geq$ 95 Vol%
O$_2$: $\leq$ 5 Vol%

Retentat:

N$_2$: 95 - 98 Vol%
O$_2$: 2 - 5 Vol%

Organosiliciumverbindungen: siehe Beispiel 1

Tabelle 2:

| Organosiliciumverb. | Feedgas | | Prozessgas | | Retentat | | Permeabilität [%] |
|---|---|---|---|---|---|---|---|
| | Konzentration [mg/m³] | Fracht [mg/h] | Konzentration [mg/m³] | Fracht [mg/h] | Konzentration [mg/m³] | Fracht [mg/h] | |
| Si2 | 750 | 37.500 | 1.000 | 10.000 | 300 | 12.000 | 68 |
| M3SiOH | 800 | 40.000 | 1.400 | 14.000 | 300 | 12.000 | 70 |
| D3 | 750 | 37.500 | 800 | 8.000 | 200 | 8.000 | 79 |
| D4 | 300 | 15.000 | 600 | 6.000 | 80 | 3.200 | 79 |
| D5 | 200 | 10.000 | 400 | 4000 | 50 | 2.000 | 80 |
| D6 | 50 | 2.500 | 70 | 700 | 20 | 800 | 68 |
| **Summe** | **2.850** | **142.500** | **4.270** | **42.700** | **950** | **38.000** | **73** |

Die Permeabilität der Organosiliciumverbindungen wird folgendermaßen berechnet:

$$\eta\ [\%]\ =\ [1\ -\ (Fracht_{Retentat}/Fracht_{Feed})]\ \times\ 100$$

## Patentansprüche

1. Kontinuierliches Verfahren zur Reinigung von Organosiliciumverbindungen enthaltender Prozessabluft, die beim Produktionsprozess zur Herstellung von Siliconen anfällt, durch Abtrennung von Organosiliciumverbindungen ausgewählt aus der Gruppe von linearen, cyclischen und verzweigten Siloxanen mit 2 bis 18 Si-Atomen, Triorganosilanolen und deren Mischungen aus dem Stickstoff und Sauerstoff enthaltenden Prozessabluftstrom mittels einer Membrantrenneinrichtung, die eine Polyoctylmethylsiloxan-Kompositmembran als semipermeable Membran auf der Basis von Siliconen enthält,
wobei die Membran selektiv permeabel für Organosiliciumverbindungen und Sauerstoff gegenüber Stickstoff ist und wobei der zu trennende, Organosiliciumverbindungen, Stickstoff und Sauerstoff enthaltende Feed-Gasstrom kontinuierlich auf den Eingang der Membrantrenneinrichtung gegeben wird, in der er durch Kontaktierung mit der Membran kontinuierlich in einen die Membrantrenneinrichtung verlassenden mit Organosiliciumverbindungen abgereicherten Retentat-Gasteilstrom und einen die Membrantrenneinrichtung verlassenden mit Organosiliciumverbindungen angereicherten Permeat-Gasteilstrom getrennt wird und wobei die Konzentration der Organosiliciumverbindungen im Feedgas in Summe 0,3 g/m$^3$ bis 1000 g/m$^3$ und die Fracht an im Feedgas enthaltenen Organosiliciumverbindungen in Summe 10 g/h bis 10000 g/h beträgt.

2. Verfahren nach Anspruch 1, **dadurch gekennzeichnet, dass** die Organosiliciumverbindungen solche sind ausgewählt aus linearen Siloxanen der Formel

$$R_3SiO(R_2SiO)_nSiR_3 \qquad (I),$$

wobei R gleich oder verschieden ist und einen einwertigen Kohlenwasserstoffrest mit 1 bis 12 C-Atomen, vorzugsweise 1-6 C-Atomen, bevorzugt einen Methyl- oder Vinylrest, bedeutet und
n 0 oder eine ganze Zahl von 1 bis 16 bedeutet, cyclischen Siloxanen der Formel

$$(R_2SiO)_x \qquad (II),$$

wobei R die oben dafür angegebene Bedeutung hat und
x eine ganze Zahl von 3 bis 18, vorzugsweise 3 bis 6, bedeutet,
Triorganosilanolen der Formel

$$R_3SiOH \qquad (III),$$

wobei R die oben dafür angegebene Bedeutung hat,
und deren Mischungen.

3. Verfahren nach Anspruch 1 oder 2, **dadurch gekennzeichnet, dass** der Druck im Permeat-Gasteilstrom höchstens 0,15 bar beträgt.

4. Verfahren nach Anspruch 1, 2 oder 3, **dadurch gekennzeichnet, dass** das Druckverhältnis von Feed-Gasstrom zu Permeat-Gasteilstrom im Bereich von 7 bis 50, bevorzugt im Bereich von 15 bis 20, liegt.

5. Verfahren nach einem der Ansprüche 1 bis 4, **dadurch gekennzeichnet, dass** es sich bei der semipermeablen Membran um eine Polyoctylmethylsiloxan-Kompositmembran auf poröser Stützstruktur aus Polyacrylnitril/Polyestervlies (POMS), handelt.

6. Verfahren nach einem der Ansprüche 1 bis 5, **dadurch gekennzeichnet, dass** der Retentat-Gasteilstrom in den Produktionsprozess zur Herstellung von Siliconen kontinuierlich zurückgeführt wird oder an die Umwelt kontinuierlich abgegeben wird.

**7.** Verfahren nach einem der Ansprüche 1 bis 6, **dadurch gekennzeichnet, dass** die im Permeat-Gasteilstrom angereicherten Organosiliciumverbindungen durch Kondensation aus dem Permeat-Gasteilstrom kontinuierlich abgeschieden werden und der so erhaltene Prozessabgasstrom an die Umwelt kontinuierlich abgegeben wird.

**8.** Verfahren nach einem der Ansprüche 1 bis 7, **dadurch gekennzeichnet, dass** mehrere Membrantrenneinrichtungen in Reihe geschaltet werden.

**Claims**

**1.** Continuous process for purifying process exhaust air which contains organosilicon compounds and is obtained in the production process for preparing silicones, by separating organosilicon compounds selected from the group consisting of linear, cyclic and branched siloxanes having from 2 to 18 Si atoms, triorganosilanols and mixtures thereof from the process exhaust air stream containing nitrogen and oxygen by means of a membrane separation apparatus which contains a polyoctylmethylsiloxane composite membrane as semipermeable membrane based on silicones, where the membrane is selectively permeable to organosilicon compounds and oxygen relative to nitrogen and the feed gas stream which is to be separated and contains organosilicon compounds, nitrogen and oxygen is continuously introduced at the inlet of the membrane separation apparatus in which it is continuously separated by contacting with the membrane into a retentate gas substream which is depleted in organosilicon compounds and leaves the membrane separation apparatus and a permeate gas substream which is enriched in organosilicon compounds and leaves the membrane separation apparatus and the concentration of the organosilicon compounds in the feed gas is from 0.3 $g/m^3$ to 1000 $g/m^3$ in total and the burden of organosilicon compounds present in the feed gas is from 10 g/h to 10 000 g/h in total.

**2.** Process according to Claim 1, **characterized in that** the organosilicon compounds are compounds selected from among linear siloxanes of the formula

$$R_3SiO(R_2SiO)_nSiR_3 \qquad (I),$$

where the radicals R are identical or different and are each a monovalent hydrocarbon radical having from 1 to 12 carbon atoms, preferably 1-6 carbon atoms, more preferably a methyl or vinyl radical, and
n is 0 or an integer from 1 to 16, cyclic siloxanes of the formula

$$(R_2SiO)_x \qquad (II),$$

where R is as defined above and
x is an integer from 3 to 18, preferably from 3 to 6,
triorganosilanols of the formula

$$R_3SiOH \qquad (III),$$

where R is as defined above,
and mixtures thereof.

**3.** Process according to Claim 1 or 2, **characterized in that** the pressure in the permeate gas substream is not more than 0.15 bar.

**4.** Process according to Claim 1, 2 or 3, **characterized in that** the pressure ratio of feed gas stream to permeate gas substream is in the range from 7 to 50, preferably in the range from 15 to 20.

**5.** Process according to any of Claims 1 to 4, **characterized in that** the semipermeable membrane is a polyoctylmethylsiloxane composite membrane on a porous support structure composed of polyacrylonitrile/polyester nonwoven (POMS).

**6.** Process according to any of Claims 1 to 5, **characterized in that** the retentate gas substream is continuously recirculated to the production process for preparing silicones or is continuously discharged into the environment.

**7.** Process according to any of Claims 1 to 6, **characterized in that** the organosilicon compounds present in higher concentration in the permeate gas substream are continuously separated off from the permeate gas substream by condensation and the resulting process exhaust gas stream is continuously discharged into the environment.

8. Process according to any of Claims 1 to 7, **characterized in that** a plurality of membrane separation apparatuses are connected in series.

## Revendications

1. Procédé continu pour la purification d'un air d'échappement de procédé contenant des composés d'organosilicium, qui se forme lors du procédé de production pour la fabrication de silicones, par séparation de composés d'organosilicium choisis dans le groupe constitué par les siloxanes linéaires, cycliques et ramifiés de 2 à 18 atomes Si, les triorganosilanols et leurs mélanges du courant d'air d'échappement de procédé contenant de l'azote et de l'oxygène au moyen d'un dispositif de séparation à membrane, qui contient une membrane composite en polyoctylméthylsiloxane en tant que membrane semi-perméable à base de silicones,
la membrane étant sélectivement perméable pour les composés d'organosilicium et l'oxygène par rapport à l'azote, et le courant de gaz d'alimentation à séparer, qui contient des composés d'organosilicium, de l'azote et de l'oxygène, étant introduit en continu à l'entrée du dispositif de séparation à membrane, dans lequel il est séparé par mise en contact avec la membrane en continu en un courant gazeux partiel de rétentat appauvri en composés d'organosilicium quittant le dispositif de séparation à membrane et un courant gazeux partiel de perméat enrichi en composés d'organosilicium quittant le dispositif de séparation à membrane, et la concentration des composés d'organosilicium dans le gaz d'alimentation étant au total de 0,3 g/m$^3$ à 1 000 g/m$^3$ et le chargement en composés d'organosilicium contenus dans le gaz d'alimentation étant au total de 10 g/h à 10 000 g/h.

2. Procédé selon la revendication 1, **caractérisé en ce que** les composés d'organosilicium sont choisis parmi les siloxanes linéaires de formule :

$$R_3SiO(R_2SiO)_nSiR_3 \qquad (I),$$

dans laquelle les R sont identiques ou différents, et signifient un radical hydrocarboné monovalent de 1 à 12 atomes C, de préférence de 1 à 6 atomes C, de préférence un radical méthyle ou vinyle, et
n signifie 0 ou un nombre entier de 1 à 16,
les siloxanes cycliques de formule :

$$(R_2SiO)_x \qquad (II),$$

dans laquelle R a la signification indiquée précédemment, et x signifie un nombre entier de 3 à 18, de préférence de 3 à 6,
les triorganosilanols de formule :

$$R_3SiOH \qquad (III),$$

dans laquelle R a la signification indiquée précédemment,
et leurs mélanges.

3. Procédé selon la revendication 1 ou 2, **caractérisé en ce que** la pression dans le courant gazeux partiel de perméat est d'au plus 0,15 bar.

4. Procédé selon la revendication 1, 2 ou 3, **caractérisé en ce que** le rapport de pression entre le courant gazeux d'alimentation et le courant gazeux partiel de perméat se situe dans la plage allant de 7 à 50, de préférence dans la plage allant de 15 à 20.

5. Procédé selon l'une quelconque des revendications 1 à 4, **caractérisé en ce que** la membrane semi-perméable consiste en une membrane composite en polyoctylméthylsiloxane sur une structure support poreuse en un non-tissé de polyacrylonitrile/polyester (POMS).

6. Procédé selon l'une quelconque des revendications 1 à 5, **caractérisé en ce que** le courant gazeux partiel de rétentat est recyclé en continu dans le procédé de production pour la fabrication de silicones ou déchargé en continu dans l'environnement.

7. Procédé selon l'une quelconque des revendications 1 à 6, **caractérisé en ce que** les composés d'organosilicium accumulés dans le courant gazeux partiel de perméat sont séparés en continu du courant gazeux partiel de perméat par condensation, et le courant de gaz d'échappement de procédé ainsi obtenu est déchargé en continu dans l'environnement.

8. Procédé selon l'une quelconque des revendications 1 à 7, **caractérisé en ce que** plusieurs dispositifs de séparation à membrane sont raccordés en série.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4941893 A

**In der Beschreibung aufgeführte Nicht-Patentliteratur**

- **M. AJKAR ; M. TRAVESSET ; S. YÜCE ; T. MELIN.** Siloxan removal from landfill and digester gas - A technology overview. *Bioresource Technology,* 2010, vol. 101, 2913-2923

- Membrane-based Removal of Volatile Methylsiloxanes from Biogas. *der Hochschule Aachen,* 2011, 68-104